# EUROPÄISCHE PATENTSCHRIFT

(11) **EP 2 564 740 B1**
(45) Veröffentlichungstag und Bekanntmachung des Hinweises auf die Patenterteilung: **10.12.2014**
(21) Anmeldenummer: 12181038.6
(22) Anmeldetag: 20.08.2012
(51) Int. Cl.: A47J 31/52

(54) **Getränkebereiter mit kapazitiver Sensoreinrichtung**
Beverage maker with capacitive sensor
Dispositif de préparation de boissons avec capteur capacitif

(30) Priorität: 29.08.2011 DE 102011081708
(43) Veröffentlichungstag der Anmeldung: 06.03.2013
(73) Patentinhaber: BSH Bosch und Siemens Hausgeräte GmbH, 81739 München (DE)
(72) Erfinder: Harloff, Angelika, 83075 Au bei Bad Aibling (DE); Radl, Mathias, 83374 Oderberg (DE); Schwaiger, Andreas, 83417 Kirchanschöring (DE)

(56) Entgegenhaltungen:
- EP-A1- 1 647 951
- DE-C1- 3 736 517
- US-A1- 2008 156 008

## Beschreibung

### Hintergrund der Erfindung

Die vorliegende Erfindung betrifft einen als Haushaltsgerät ausgebildeten Getränkebereiter mit einem eine Front aufweisenden Hauptkörper, an welcher ein Auslauf zur Bereitstellung eines Getränks und eine Bedieneinrichtung des Haushaltsgeräts angeordnet sind.

### Stand der Technik

Üblicherweise weisen Getränkebereiter eine Bedienvorrichtung auf der Vorderseite des Geräts auf, mit welcher ein Benutzer das gewünschte Getränk auswählen kann und abschließend kann der Zapfvorgang durchgeführt werden. Es kann jedoch vorkommen, dass der Benutzer keine Tasse unter dem Auslauf platziert hat. Die herkömmlichen Geräte würden diese Fehlbedienung nicht erfassen, und folglich kann es zu Verschmutzungen oder im schlimmsten Falle zu Verbrühungen des Benutzers vorkommen.

Um diese Nachteile zu umgehen, weisen manche Geräte mechanische Schalter auf, die das Vorhandensein eines Trinkgefäßes erfassen und darauf die Maschine zur Bedienung freigeben.

Eine weitere Lösung ist in der DE 10 2008 029 835 A1 offenbart, welche einen Getränkebereiter, insbesondere Kaffeemaschine beschreibt, deren Auslauf motorisch antreibbar ist und auf Basis einer erfassten Tassenhöhe einstellbar ist. Zur Höhenerfassung schlägt die DE 10 2008 029 835 A1 den Einsatz einer Ultraschallsensoreinrichtung mit einem Sender und einem Empfänger an der Gerätefront.

Gemäß dieser Lösung sind somit mehrere Sensoren notwendig und weiter müssen diese mit dem Getränkeauslauf mechanisch und somit beweglich verbunden sein, welches wiederum zu mechanischen Fehlfunktionen führen kann.

### Der Erfindung zugrundeliegende Aufgabe

Somit liegt der Erfindung die Aufgabe zugrunde, einen Getränkebereiter bereitzustellen, der kostengünstig in der Herstellung ist und weiter möglichst wenig Funktionsbauteile umfasst.

### Erfindungsgemäße Lösung

Die Lösung der gestellten Aufgabe gelingt durch ein Getränkebereiter mit den Merkmalen des Anspruchs 1. Vorteilhafte Aus- und Weiterbildungen, welche einzeln oder in Kombination miteinander eingesetzt werden können, sind Gegenstand der abhängigen Ansprüche.

Der erfindungsgemäße Getränkebereiter umfasst einen Hauptkörper mit einer Front auf, an welcher eine Bedieneinrichtung und ein Auslauf angeordnet sind. An der Front ist weiter eine kapazitive Sensoreinrichtung vorgesehen, die dergestalt ausgebildet ist, um das Vorhandensein eines unter dem Auslauf positionierten Gefäßes zu erfassen.

Somit kann eine einfache und sichere Bedienung des Geräts gewährleistet werden. So kann beispielsweise nur dann ein Getränk gezapft werden, falls die Sensoreinrichtung ein geeignetes Gefäß unter dem Auslauf detektiert hat. Ferner kann keine Flüssigkeit neben dem Gefäß auslaufen, da die Sensoreinrichtung die richtige Positionierung unter dem Auslauf erfasst, und folglich nur dann die Maschine freigibt. Der Getränkebereiter ist derart eingerichtet, dass beim Abnehmen bzw. Wegnehmen des Gefäßes der Zapfvorgang abgebrochen wird, so dass keine Verschmutzungen oder Verbrühungen entstehen können.

### Bevorzugte Ausgestaltung der Erfindung

Es wird bevorzugt, dass die die Front eine Wandplatte aufweist, hinter welche die Sensoreinrichtung angeordnet ist. Somit kann das Äußere des Geräts nicht durch die Sensoreinrichtung verändert werden, und weiter kann die Reinigung im Bereich des Auslaufs problemlos gestaltet werden.

Gemäß einer Ausführungsform der vorliegenden Erfindung ist die Sensoreinrichtung dergestalt ausgebildet, um unter dem Auslauf positionierte Gefäße unterschiedlichen Typs zu erfassen. Dies gewährleistet eine flexible Verwendung des Getränkebereiters, da der Benutzer unterschiedliche Gefäße verwenden kann, wobei die Sensoreinrichtung lediglich das Vorhandensein eines Gefäßes erfasst und folglich das Zapfen freigibt.

Erfindungsgemäß bevorzugt ist die Sensoreinrichtung mit einem Steuergerät des Getränkebereiters verbunden, wobei die Sensoreinrichtung ausgebildet ist, um kontinuierlich das Vorhandensein des Gefäßes zu erfassen, und um ein Signal dem Steuergerät bereitzustellen. Folglich kann das Steuergerät den Zapfvorgang beenden, falls währenddessen das Gefäß entfernt werden sollte.

Es ist bevorzugt, dass die Sensoreinrichtung als elektronisches Modul ausgebildet ist. Somit wird die Montage des Getränkebereiters vereinfacht werden, da diese beispielsweise automatisch auf einer Produktionslinie durchgeführt werden kann.

Zweckmäßigerweise ist das elektronische Modul im unteren Bereich der Front angeordnet. In dieser Position kann die Sensoreinrichtung genauer erfassen, da im unteren Bereich eines Gefäßes die höchste Änderung der Dielektrizitätskonstante erfassbar ist. Folglich kann ein genauer und fehlerfreier Betreib des Getränkebereites gewährleistet werden.

Gemäß einer weiteren Ausführungsform der Erfindung ist eine zweite Sensoreinrichtung am Auslauf angeordnet, die dergestalt ausgebildet ist, um eine Gefäßhöhe zu erfassen. Daher kann auch im Falle eines höhenverstellbaren Auslaufs die beste Zapfhöhe bereitgestellt werden. Dazu soll der Auslauf ein geeignetes Antriebsmittel aufweisen, das mit dem Steuergerät verbunden ist.

Zweckmäßigerweise stellt die zweite Sensoreinrichtung ein zweites Signal entsprechend der Gefäßhöhe für das Steuergerät bereit, wobei das Steuergerät eingerichtet ist, um auf Basis dieses Signals den Durchfluss am Auslauf zu steuern. Dies ist besonders vorteilhaft, falls der Auslauf nicht höhenverstellbar ist und das Gefäß eine relativ geringe Höhe aufweist. In diesem Fall wird das Steuergerät den Durchfluss verringern, um somit das Spritzen zu minimieren. Folglich kann ein hygienischer Betrieb gewährleistet werden.

Durch den erfindungsgemäßen Getränkebereiter kann ein flexibler und sicherer Betrieb bereitgestellt werden, da ein Vorhandensein eines Gefäßes erfasst werden kann und auf dieser Basis die Steuerung des Getränkebereites gewährleistet werden kann.

### Kurzbeschreibung der Zeichnungen

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Es zeigt schematisch:

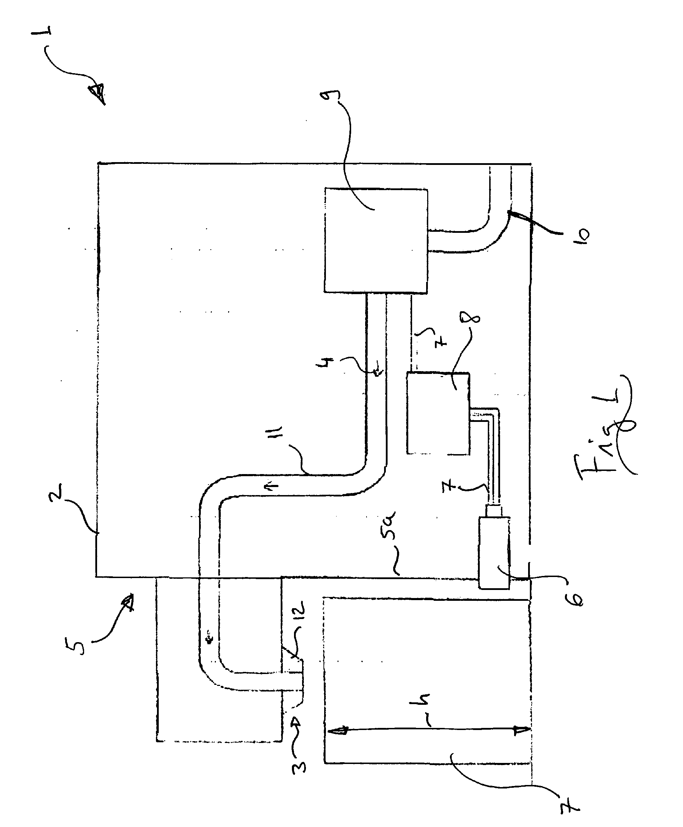

- Fig. 1: eine schematische Ansicht eines Getränkebereiters gemäß der vorliegenden Erfindung mit einer kapazitiven Sensoreinrichtung.

### Ausführliche Beschreibung anhand eines Ausführungsbeispiels

Bei der nachfolgenden Beschreibung der vorliegenden Erfindung bezeichnen gleiche Bezugszeichen gleiche oder vergleichbare Komponenten.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

Fig. 1 zeigt einen Getränkebereiter mit einer kapazitiven Sensoreinrichtung gemäß der vorliegenden Erfindung. Der Getränkebereiter 1 umfasst ein Gehäuse, das im Wesentlichen den Hauptkörper 2 definiert. Der Hauptkörper 2 ist ausgebildet, um alle wesentlichen Funktionseinheiten des Getränkebereiters 1 aufzunehmen. Weiter weist der bereiter 1 einen Wassertank (nicht gezeigt) auf, der mit einer im Hauptkörper 2 angeordneten Pumpe 9 in Verbindung steht. Dazu wird eine Zulaufleitung 10 zwischen Tank und Pumpe 9 vorgesehen.

Falls heiße Getränke zubereitet werden sollen, kann ferner eine Heizeinrichtung oder dergleichen im Hauptkörper 2 angeordnet sein. Aus der Pumpe 9 wird eine Leitung 11 bereitgestellt, die die kalte oder warme Flüssigkeit zum Auslauf 3 des Getränkebereiters leitet. Der Auslauf 3 weist eine geeignete Düse 12 auf, die ein geeignetes Strahlenbild an der Getränkeentnahmestelle aufweist.

Der Hauptkörper 2 des Getränkebereiters 1 weist eine Front 5 auf, die als Gehäusefront ausgebildet ist, an welcher die Auslaufstruktur 3 angeordnet ist. Der Auslauf 3 kann fest implementiert sein, aber auch höhenverstellbare Realisierungen sind vorstellbar.

An der Gehäusefront 5 ist eine kapazitive Sensoreinrichtung 6 vorgesehen, welche das Vorhandensein eines geeigneten Gefäßes 7 unter dem Auslauf 3 erfassen kann. Vorteilhafterweise ist die Sensoreinrichtung hinter eine Wandplatte 5a der Front 5 angeordnet, so dass diese von Außen nicht einsehbar ist. Gemäß dieser Ausführungsform kann das Gefäß 7 durch die Sensoreinrichtung 6 berührungslos erfasst werden, und anschließend wird dies der Steuereinheit 8 gemeldet. Die Steuereinheit bzw. Steuergerät 8 ist mit Hilfe von Signalleitungen 7 mit der Sensoreinrichtung 6 verbunden und ist eingerichtet, um den Betrieb des Getränkebereiters 1 zu gewährleisten. So wird ebenfalls die Bedieneinrichtung über geeignete Signalleitungen 7 mit dem Steuergerät 8 verbunden.

Die kapazitive Sensoreinrichtung wirkt als Initiator und erkennt ein beliebiges Gefäß 7, das unter dem Auslauf positioniert ist. Das Gefäß wirkt als Dielektrikum für den Sensor 6, der im Falle des Vorhandenseins eines Gefäßes 7 eine Dielektrikumsänderung erfasst. Diese Änderung wird folglich als Gefäß erkannt und der Getränkebereiter kann nun bedient werden.

Die Sensoreinrichtung 6 ist eingerichtet, um kontinuierlich das eventuelle Vorhandensein eines Gefäßes 7 zu erfassen, welches folglich einen schnellen sicheren Betrieb des Getränkebereiters 1 gewährleistet. Falls beispielsweise das Gefäß 7 während eines Zapfvorganges entfernt wird, kann das Steuergerät 8 sofort die auslaufende Flüssigkeit anhalten. Falls dann ein Benutzer das Gefäß 7 wieder unter dem Auslauf 3 platziert, kann der Zapfvorgang fortgeführt werden. Das bedeutet, dass die Sensoreinrichtung 6 das Momentansignal auswertet, und folglich kann das Steuergerät 8 schnell reagieren.

Die Sensoreinrichtung ist vorteilhaft im unteren Bereich der Platte 5a angeordnet sein, damit diese mit dem unteren Bereich eines Gefäßes 7 zusammenwirken kann. In diesem Bereich kann üblicherweise die größte Änderung des Dielektrikums detektiert werden, so dass immer ein genauer Wert an das Steuergerät 8 weitergeleitet werden kann.

Ferner kann eine zweite Sensoreinrichtung (nicht gezeigt) am Auslauf 3 angeordnet sein, welche eingerichtet ist eine Gefäßhöhe zu erfassen und anschließend durch das Steuergerät auszuwerden. So kann beispielsweise im Falle eines höhenverstellbaren Auslaufs 3 die optimale Zapfhöhe gewährleistet werden. Dazu wird der Auslauf mittels geeigneter Mittel in eine bestimmte Position hoch bzw. runter gefahren.

Weiter kann durch die Sensoreinrichtung 6 gewährleistet werden, dass nur zulässige Gefäße 7 verwendet werden, da sonst eine Freigabe des Getränkebereiters durch das Steuergerät 8 nicht erfolgt. Ein solcher Fall ist beispielsweise die Verwendung eines Gefäßes 7, der nicht für den gewünschten Zapfvorgang (Getränkemenge) dimensioniert ist.

Durch den erfindungsgemäßen Getränkebereiter kann ein flexibler und sicherer Betrieb bereitgestellt werden, da ein Vorhandensein eines Gefäßes erfasst werden kann und auf dieser Basis die Steuerung des Getränkebereites gewährleistbar ist.

### Bezugszeichenliste

- 1: Getränkebereiter
- 2: Hauptkörper bzw. Gehäusehauptkörper
- 3: Auslauf bzw. Entnahmestelle
- 4: Fließrichtung
- 5: Front des Hauptkörpers
- 6: Sensoreinrichtung bzw. kapazitives Sensormodul
- 7: Signalleitungen
- 8: Steuergerät bzw. Steuervorrichtung des Getränkebereiters
- 9: Pumpe
- 10: Flüssigkeitsverbindung zwischen Pumpe und Wassertank
- 11: Flüssigkeitsverbindung zwischen Pumpe und Auslauf bzw. Entnahmestelle
- 12: Auslaufdüse

## Patentansprüche

1. Als Haushaltsgerät ausgebildeter Getränkebereiter (1) mit einem eine Front (5) aufweisenden Hauptkörper (2), an welcher ein Auslauf (3) zur Bereitstellung eines Getränks und eine Bedieneinrichtung des Getränkebereiters (1) angeordnet sind, wobei an der Front (5) weiter eine kapazitive Sensoreinrichtung (6) vorgesehen ist, die dergestalt ausgebildet ist, um das Vorhandensein eines unter dem Auslauf positionierten Gefäßes (7) zu erfassen, **dadurch gekennzeichnet, dass** eine zweite Sensoreinrichtung am Auslauf (3) angeordnet ist, die dergestalt ausgebildet ist, um eine Gefäßhöhe (h) zu erfassen, wobei die zweite Sensoreinrichtung ein zweites Signal entsprechend der Gefäßhöhe (h) für das Steuergerät (8) bereitstellt, wobei das Steuergerät (8) eingerichtet ist, um auf Basis dieses Signals den Durchfluss am Auslaufs (3) zu steuern.

2. Getränkebereiter (1) nach Anspruch 1, **dadurch gekennzeichnet, dass** die die Front (5) eine Wandplatte (5a) aufweist, hinter welche die Sensoreinrichtung (6) angeordnet ist.

3. Getränkebereiter (1) nach Anspruch 1 oder 2, **dadurch gekennzeichnet, dass** die Sensoreinrichtung (6) dergestalt ausgebildet ist, um unter dem Auslauf (3)_positionierte Gefäße (7) unterschiedlichen Typs zu erfassen.

4. Getränkebereiter (1) nach mindestens einem der vorhergehenden Ansprüche, **dadurch gekennzeichnet, dass** die Sensoreinrichtung (6) mit einem Steuergerät (8) des Getränkebereiters (1) verbunden ist, wobei die Sensoreinrichtung (6) ausgebildet ist, um kontinuierlich das Vorhandensein des Gefäßes (7) zu erfassen, und um ein Signal dem Steuergerät (8) bereitzustellen.

5. Getränkebereiter (1) nach mindestens einem der vorhergehenden Ansprüche, **dadurch gekennzeichnet, dass** die Sensoreinrichtung (6) als elektronisches Modul ausgebildet ist.

6. Getränkebereiter (1) nach mindestens einem der vorhergehenden Ansprüche, **dadurch gekennzeichnet, dass** das elektronische Modul im unteren Bereich der Front (5) angeordnet ist.

## Claims

1. Beverage maker (1) realised as a domestic appliance, having a main body (2) with a front (5) on which are arranged an outlet (3) for dispensing a beverage and an operating unit of the beverage maker (1), wherein a capacitive sensor (6) is further provided on the front (5), which is realised so as to register the presence of a vessel (7) positioned below the outlet, **characterised in that** a second sensor is arranged at the outlet (3), which is realised so as to register a vessel height (h), with the second sensor providing the controller (8) with a second signal corresponding to the vessel height (h), with the controller (8) being configured so as to control the flow rate at the outlet (3) on the basis of this signal.

2. Beverage maker (1) according to claim 1, **characterised in that** the front (5) has a wall panel (5a) behind which the sensor (6) is arranged.

3. Beverage maker (1) according to claim 1 or 2, **characterised in that** the sensor (6) is realised so as to register different types of vessels (7) positioned beneath the outlet (3).

4. Beverage maker (1) according to at least one of the preceding claims, **characterised in that** the sensor (6) is connected to a controller (8) of the beverage maker (1), wherein the sensor (6) is realised so as continuously to register the presence of the vessel (7), and so as to provide the controller (8) with a signal.

5. Beverage maker (1) according to at least one of the preceding claims, **characterised in that** the sensor (6) is realised as an electronic module.

6. Beverage maker (1) according to at least one of the preceding claims, **characterised in that** the electronic module is arranged in the lower part of the front (5).

## Revendications

1. Dispositif de préparation de boissons (1) conçu comme un appareil ménager comprenant un corps principal (2) présentant une partie frontale (5) sur laquelle sont disposés un orifice d'écoulement (3) pour fournir une boisson et un dispositif de commande du dispositif de préparation de boissons (1), où il est prévu en outre, sur la partie frontale (5), un détecteur capacitif (6) qui est conçu de façon à détecter la présence d'un récipient (7) positionné sous l'orifice d'écoulement,
**caractérisé en ce qu'**un deuxième détecteur est disposé au niveau de l'orifice d'écoulement (3), deuxième détecteur qui est conçu de façon à détecter une hauteur (h) du récipient, où le deuxième détecteur fournit, pour l'appareil de commande (8), un deuxième signal correspondant à la hauteur (h) du récipient, où l'appareil de commande (8) est monté pour réguler, sur la base de ce signal, le débit au niveau de l'orifice d'écoulement (3).

2. Dispositif de préparation de boissons (1) selon la revendication 1, **caractérisé en ce que** la partie frontale (5) présente un panneau de paroi (5a) derrière lequel est disposé le détecteur (6).

3. Dispositif de préparation de boissons (1) selon la revendication 1 ou 2, **caractérisé en ce que** le détecteur (6) est conçu de façon à détecter des récipients (7) d'un type différent positionnés sous l'orifice d'écoulement (3).

4. Dispositif de préparation de boissons (1) selon au moins l'une quelconque des revendications précédentes, **caractérisé en ce que** le détecteur (6) est connecté à un appareil de commande (8) du dispositif de préparation de boissons (1), où le détecteur (6) est conçu pour détecter en continu la présence du récipient (7) et pour fournir un signal à l'appareil de commande (8).

5. Dispositif de préparation de boissons (1) selon au moins l'une quelconque des revendications précédentes, **caractérisé en ce que** le détecteur (6) est conçu comme un module électronique.

6. Dispositif de préparation de boissons (1) selon au moins l'une quelconque des revendications précédentes, **caractérisé en ce que** le module électronique est disposé dans la zone inférieure de la partie frontale (5).
